# EUROPÄISCHE PATENTANMELDUNG

(11) **EP 3 154 253 A1**
(43) Veröffentlichungstag der Anmeldung: **12.04.2017**
(21) Anmeldenummer: 16191808.1
(22) Anmeldetag: 30.09.2016
(51) Int. Cl.: H04N 5/225, G03B 37/04, H04N 17/00

(54) **MEHR-SENSOR-KAMERA**

(30) Priorität: 06.10.2015 DE 102015116920
(71) Anmelder: Krauss-Maffei Wegmann GmbH & Co. KG, 80997 München (DE)
(72) Erfinder: Lischewski, Frank, 80997 München (DE); Fehr, Dominik, 80997 München (DE)
(74) Vertreter: Feder Walter Ebert

(57) **Zusammenfassung**

Mehr-Sensor-Kamera 1 mit mindestens zwei Aufnahmeeinheiten 2, die jeweils einen Bildsensor 7 umfassen, wobei eine Justierungsmarkierung 14, insbesondere zur Justierung von Sichtfeldern 3 der Aufnahmeeinheiten 2 zueinander, in die Aufnahmeeinheit 2 integrierte ist und ein Verfahren zur Justierung von zwei oder mehr Aufnahmeeinheiten 2 einer Mehr-Sensor-Kamera 1, wobei die Aufnahmeeinheiten 2 zumindest einen Bildsensor 7 umfassen, und wobei bei einer Belichtung der Bildsensoren 7 eine in die Aufnahmeeinheit 2 integrierte Justierungsmarkierung 14, insbesondere zur Justierung von Sichtfeldern 3 der Aufnahmeeinheiten 2 zueinander, abgebildet wird.

## Beschreibung

Die vorliegende Erfindung betrifft eine Mehr-Sensor-Kamera mit mindestens zwei Aufnahmeeinheiten, die jeweils einen Bildsensor umfassen. Einen weiteren Gegenstand der Erfindung bildet ein Verfahren zur Justierung von mindestens zwei Aufnahmeeinheiten einer Mehr-Sensor-Kamera, wobei die Aufnahmeeinheiten zumindest einen Bildsensor umfassen.

Mehr-Sensor-Kameras kommen bei unterschiedlichsten Anforderungen zum Einsatz. Allgemein bieten sich Mehr-Sensor-Kameras für all diejenigen Abbildungsvorgänge an, bei denen ein außergewöhnliches Sichtfeld mit einer Kamera abgebildet werden soll. Dabei kann es sich beispielsweise um Sichtfelder mit einer besonders großen horizontalen und/oder vertikalen Ausdehnung handeln. Beispielsweise eignen sich Mehr-Sensor-Kameras zur Erzeugung von Panoramaansichten oder Panoramabildern, die einen großen Winkelbereich der umgebenden Realität abbilden. Denn derart ungewöhnliche Sichtfelder können mit einer Kamera mit lediglich einem Bildsensor, wenn überhaupt, nur durch sehr komplexe, teure und anfällige Abbildungsoptiken realisiert werden. Im Gegenteil dazu wird bei Mehr-Sensor-Kameras mit einer Mehrzahl von Bildsensoren, insbesondere digitalen Bildsensoren ermöglicht, dass das jeweils von einem Bildsensor erfasste Sichtfeld im Rahmen einer datentechnischen Verarbeitung zu einem kombinierten Ausgangssignal aufbereitet werden, welches dann eine Abbildung einer Kombination der mit den jeweiligen Bildsensoren erfassten Sichtfelder darstellt.

Damit sind Mehr-Sensor-Kameras auch, aber keinesfalls ausschließlich, für den Einsatz in Fahrzeugen geeignet. Besonders Fahrzeuge von Sicherheitsbehörden und/oder des Militär können besondere Anforderungen an die Sicherheit und den Schutz der Insassen oder der Besatzung stellen. So ist es beispielsweise wünschenswert, dass die Besatzung eines gepanzerten Fahrzeugs im Betrieb des Fahrzeugs möglichst uneingeschränkt dessen Umgebung wahrnehmen kann, ohne dass sich die Besatzung dabei einer Gefährdung durch zumindest teilweises Verlassen des Fahrzeugs aussetzt. Zu diesem Zweck bieten sich Mehr-Sensor-Kameras in besonders vorteilhafter Weise an.

Um jedoch die Abbildungen der Sichtfelder der einzelnen Bildsensoren aufbereiten und kombinieren zu können, ist es notwendig, dass die den Bildsensor umfassenden Aufnahmeeinheiten der Mehr-Sensor-Kamera in einer bestimmten Relativposition zueinander ausgerichtet sind. Ansonsten können beispielsweise bei der Wiedergabe von mit einer Mehr-Sensor-Kamera aufgenommenen Panoramaansichten Teile der abzubildenden Umgebung doppelt, versetzt, verzerrt oder gar nicht abgebildet werden. Um diese Ausrichtung zu erreichen, ist im Stand der Technik beispielsweise vorgesehen, dass in definierten Abständen zu einer Mehr-Sensor-Kamera ein Muster beispielsweise ein Musterteppich platziert wird und eine Justierung der Aufnahmeeinheiten vorgenommen wird, die darauf abzielt, auf einer mit der Mehr-Sensor-Kamera verbundenen Anzeige ein verzerrungsfreies und durchgängiges Abbild des Musters oder Musterteppichs zu erhalten. Für den Fall, dass eine Nachjustierung erforderlich wird, muss dazu ebenfalls das skizzierte Verfahren unter Verwendung des Musters oder Musterteppichs ausgeführt werden.

Ein derartiges Justieren, insbesondere ein Nachjustieren der Aufnahmeeinheiten einer Mehrbild-Sensor-Kamera hat den Nachteil, dass sie viel Platz benötigt und zudem nur unter bestimmten Bedingungen, insbesondere bestimmten Abbildungsbedingungen der Umgebung durchgeführt werden kann. Zudem erfordert eine Justierung oder Nachjustierung der Aufnahmeeinheiten mit einem in der Umgebung der Mehr-Sensoren-Kamera positionierten Musters oder Musterteppichs viel Zeit. Dies bedeutet insbesondere, dass die Justierung der Aufnahmeeinheiten der Mehr-Sensor-Kamera insbesondere nicht während des allgemeinen Betriebs der Mehr-Sensor-Kamera durchgeführt werden kann.

Gerade bei geländegängigen Fahrzeugen oder militärischen Fahrzeugen, die mit einer Mehr-Sensor-Kamera ausgestattet sind, kann jedoch der Betrieb zu starken Vibrationen und Erschütterungen des Fahrzeugs führen, die sich wiederum auf die jeweilige Ausrichtung der Aufnahmeeinheiten auswirken. Damit kann es nötig werden, die Mehr-Sensor-Kamera während des Betriebs eines solchen Fahrzeugs nachzujustieren.

Die **Aufgabe** der vorliegenden Erfindung ist es daher, eine Mehr-Sensor-Kamera und ein Verfahren zu Justierung von zwei oder mehr Aufnahmeeinheiten einer Mehr-Sensor-Kamera anzugeben, die eine unkomplizierte und schnelle Justierung ermöglichen.

Diese Aufgabe wird bei einer Mehr-Sensor-Kamera der eingangs genannten Art dadurch gelöst, dass die Aufnahmeeinheit eine integrierte Justierungsmarkierung aufweist, mit der insbesondere die Justierung von Sichtfeldern der Aufnahmeeinheiten zueinander ermöglicht wird.

Durch die Integration der Justierungsmarkierung in die Aufnahmeeinheit oder die Aufnahmeeinheiten kann die Justierung der Aufnahmeeinheiten und/oder die von den Aufnahmeeinheiten erfassten Sichtfelder ohne jegliche äußere Justierungsmittel oder Justierungshilfsmittel durchgeführt werden. Damit kann die Justierung oder Nachjustierung in kürzester Zeit und auf kleinstem Raum ausgeführt werden. Eine Erstjustierung der Mehr-Sensor-Kamera und deren Aufnahmeeinheiten, ggf. auch hinsichtlich der Positionierung der Justierungsmarkierung in der Aufnahmeeinheit, kann in bekannter Weise vorgesehen sein und die Präzision der Justierung oder Nachjustierung einer erfindungsgemäßen Mehr-Sensor-Kamera dabei weiter erhöhen.

Eine derartige Justierung der erfindungsgemäßen Mehr-Sensor-Kamera ist dabei auch bei einem Einsatz der Mehr-Sensor-Kamera an oder mit einem militärischen Fahrzeug oder einem Fahrzeug von Sicherheitsbehörden von besonderem Vorteil, da die Verwendung der Mehr-Sensor-Kameras bei diesen Fahrzeugen in erster Linie dazu dient, dass sich die Fahrzeugbesatzung im Einsatz im Inneren des Fahrzeugs aufhält oder das Fahrzeug zumindest nicht verlassen muss. Dementsprechend ermöglicht die erfindungsgemäße Mehr-Sensor-Kamera eine Justierung, ggf. auch unter Einsatzbedingungen, ohne dass dazu ein Besatzungsmitglied das Fahrzeug verlassen muss, um beispielsweise den zur Justierung benötigten Musterteppich im Umfeld der Mehr-Sensor-Kamera des Fahrzeugs zu positionieren und/oder dessen Position zu ändern.

Gemäß einer vorteilhaften Ausgestaltung kann vorgesehen sein, dass die Justierungsmarkierung auf einem fest gegenüber dem Bildsensor angeordneten Element der Aufnahmeeinheit angeordnet ist. Dadurch wird sichergestellt, dass die Justierungsmarkierung eine definierte Position gegenüber dem Bildsensor der Aufnahmeeinheit aufweist, die zu dem unveränderlich ist. Damit werden eine sichere Justierung der Aufnahmeeinheiten und eine entsprechende Justierung der Mehr-Sensor-Kamera ermöglicht.

Es kann besonders wünschenswert sein, wenn die Justierungsmarkierung in eine Abbildungsoptik der Aufnahmeeinheit integriert ist. Diese Anordnung ist besonders vorteilhaft, da die Aufnahmeeinheiten in einem Großteil der Fälle ohnehin über eine entsprechende Abbildungsoptik verfügen. Dementsprechend kann mit der Integration der Justierungsmarkierung in die Abbildungsoptik eine Integration in die entsprechende Aufnahmeeinheit besonders einfach und effektiv erreicht werden.

Außerdem kann es besonders vorteilhaft sein die Justierungsmarkierung als permanente Justierungsmarkierung auszuführen. Die permanente Justierungsmarkierung ist dabei als gegenständlicher Teil der Vorrichtung ausgestaltet. Insbesondere ist die Existenz der permanenten Justierungsmarkierung von einem Lichteinfall in die Abbildungseinheit oder einer sonstigen Erzeugung von Licht oder Strahlung unabhängig.

Um eine möglichst genau definierte Position der Justierungsmarkierung bezüglich des Abbildungssensors zu erreichen, kann in einer vorteilhaften Ausgestaltung der Mehr-Sensor-Kamera vorgesehen sein, dass die Justierungsmarkierung auf einer direkt mit dem Bildsensor verbundenen transparenten Abdeckschicht angeordnet ist. Bei der transparenten Abdeckschrift kann es sich beispielsweise um eine von der Aufnahmeeinheit und/oder vom Abbildungssensor ohnehin umfasste Schutzabdeckung handeln, die zum Schutz der Fotozellen des Bildsensors mit dem Bildsensor, insbesondere mit der die Fotozellen des Bildsensors aufweisenden Oberfläche des Bildsensors verbunden ist.

Es ist weiter besonders vorteilhaft, wenn die Justierungsmarkierung so angeordnet ist, dass bei einer Belichtung des Bildsensors die Justierungsmarkierung auf den Bildsensors abgebildet wird. Es ist weiter besonders wünschenswert, wenn die Justierungsmarkierung als passive Justierungsmarkierung ausgebildet ist. Die passive Justierungsmarkierung kann dabei so ausgestaltet sein, dass eine Belichtung der Justierungsmarkierung zu einer Abbildung der Justierungsmarkierung auf dem Bildsensor führt. Die passive Justierungsmarkierung kann zudem auch so ausgebildet sein, dass auch der externe Lichteinfall in die Aufnahmeeinheit, zur Erzeugung eines digitalen Sensorsignals zur Abbildung der Gegenstände im Sichtfeld der Aufnahmeeinheit zur Abbildung der Justierungsmarkierung durch den oder auf den Bildsensor führt.

Der Vorteil einer passiven Justierungsmarkierung liegt unter anderem darin, dass insbesondere bei ausreichendem externen Lichtverhältnissen und entsprechend ausreichendem Lichteinfall in die Aufnahmeeinheit eine automatische Erzeugung oder Abbildung der Justierungsmarkierung erfolgen kann, ohne zusätzlichen und defektanfälligen Stromverbraucher zur Erzeugung der Justierungsmarkierung

In einer ebenfalls besonders wünschenswerten Ausgestaltung der Mehr-Sensor-Kamera ist vorgesehen, dass die Justierungsmarkierung so angeordnet ist, dass bei einer Belichtung des Bildsensors die Justierungsmarkierung am Rand und/oder in einer Ecke des Bildsensors abgebildet wird. Dadurch werden mehrere unterschiedliche Vorteile realisiert. Einerseits kann durch die beschriebene Anordnung der Justierungsmarkierung verhindert werden, dass die Justierungsmarkierung den Betrieb der Mehr-Sensor-Kamera stört oder beeinträchtigt. Andererseits ist die oben beschriebene Anordnung der Justierungsmarkierung deshalb vorteilhaft, weil bei den Mehr-Sensor-Kameras in aller Regel die Sichtfelder der jeweiligen Aufnahmeeinheiten leicht überlappend angeordnet oder justiert werden sollen, um aus den mit den jeweiligen Aufnahmeeinheiten erfassten Sichtfeldern im Rahmen einer datentechnischen Verarbeitung oder Aufarbeitung ein lückenloses und/oder übergangsloses virtuelles Gesamtsichtfeld der Mehr-Sensor-Kamera zu erzeugen. Dementsprechend sind die Randbereiche und/oder die Eckbereiche des Bildsensors zum Zweck der Entzerrung der Abbildung und der Herstellung der notwendigen Überlappung der abgebildeten Bereiche von besonderem Interesse.

Die Justierungsmarkierung kann grundsätzlich durch jede geometrische Form gebildet werden. Dabei kann es sich beispielsweise um einen einfachen Punkt oder einen Kreis handeln. Jedoch auch komplexere geometrische Formen sind durchaus möglich. Die Justierungsmarkierung kann dabei als Positiv- und oder als Negativbild vorgesehen sein. Das bedeutet, dass die Justierungsmarkierung durch eine Transmission von Strahlung, durch eine Absorption von Strahlung oder durch eine Kombination von Transmission und Absorption auf dem Bildsensor abgebildet wird.

In diesem Zusammenhang ist es besonders vorteilhaft, wenn die Justierungsmarkierung eine transparente Fläche und eine die Fläche zumindest abschnittsweise umschließende opake Kontur aufweist. Dadurch wird einerseits die optische Beeinträchtigung der Abbildungen der Aufnahmeeinheit durch die Justierungsmarkierung reduziert, da auf dem Bildsensor lediglich die opake Kontur der Justierungsmarkierung als Abschattung bzw. Abdunkelung abgebildet wird. Dadurch kann jedoch andererseits auch eine verhältnismäßig große Justierungsmarkierung zum Einsatz kommen, die entsprechend viele und kleine Details aufweist, die zu einer insgesamt hochpräzisen Justierung der Aufnahmeeinheiten der Mehr-Sensor-Kamera führt.

In einer weiteren vorteilhaften Ausführungsform der Mehr-Sensor-Kamera ist zudem vorgesehen, dass die opake Kontur so angeordnet ist, dass bei einer Belichtung des Bildsensors die Kontur zumindest abschnittsweise umlaufend am Rand des Bildsensors abgebildet wird. Dies bedeutet, dass die Justierungsmarkierung einen opaken Justierungsrand auf dem Bildsensor abbildet. Damit kann eine besonders einfache und schnelle Grobjustierung der Aufnahmeeinheiten vorgenommen werden, da ein solcher Rand leicht wahrnehmbar ist und zudem intuitiv gegenüber anderen Justierungsmarkierungen, insbesondere gegenüber entsprechenden Ränder ausgerichtet werden kann.

Ebenfalls kann vorteilhaft vorgesehen sein, dass die Justierungsmarkierung, insbesondere die Fläche der Justierungsmarkierung als Koordinatenkreuz, insbesondere als rechtwinkliges Koordinatenkreuz ausgebildet ist. Dabei kann weiter vorgesehen sein, dass die jeweiligen Pfeile des Koordinatenkreuzes definierte Längen und Breiten aufweisen. Beispielsweise können die beiden rechtwinklig angeordneten Pfeile gleich geformt, also gleich lang und gleich breit sein. Mit einer Ausführung der Justierungsmarkierung, insbesondere der Fläche der Justierungsmarkierung in der Form eines rechtwinkligen Koordinatenkreuzes kann in besonders einfacher und intuitiver Weise die Entzerrung einer Aufnahmeeinheit im Rahmen der Justierung vorgenommen werden. So kann beispielsweise die Entzerrung einer Aufnahmeeinheit als abgeschlossen angesehen werden, wenn die Justierungsmarkierung auch in ihrer Abbildung als rechtwinkeliges Koordinatenkreuz mit entsprechenden Abmessungen oder Abmessungsverhältnissen erscheint oder dargestellt wird. Außerdem ermöglicht eine Justierungsmarkierung in Form eines Koordinatenkreuzes eine einfache und intuitive Ausrichtung bzw. Justierung der Aufnahmeeinheit, insbesondere gegenüber anderen Aufnahmeeinheiten, wenn alle oder zumindest ein Teil der Aufnahmeeinheiten ein identisches Koordinatenkreuz als Justierungsmarkierung aufweisen.

Um eine Justierung der Mehr-Sensor-Kamera unabhängig von den Umweltbedingungen, insbesondere unabhängig von den Abbildungsbedingungen möglich zu machen, ist in eine weitere vorteilhafte Ausgestaltung vorgesehen. Gemäß dieser umfasst die Mehr-Sensor-Kamera eine Beleuchtungsvorrichtung zur Beleuchtung der Justierungsmarkierung oder der Justierungsmarkierungen. Bei einer Mehr-Sensor-Kamera, die für Licht im sichtbaren Spektrum empfindlich ist, bedeutet dies, dass mit der entsprechenden Beleuchtungsvorrichtung eine Beleuchtung der Justierungsmarkierung bei Dunkelheit erfolgen kann, also dass die Justierung der Mehr-Sensor-Kamera auch im Dunkeln, insbesondere bei Nacht durchgeführt werden kann.

Dabei ist es besonders vorteilhaft, wenn jeweils eine Beleuchtungsvorrichtung von jeweils einer Aufnahmeeinheit umfasst ist. Es kann also vorgesehen sein, dass die Beleuchtungsvorrichtung in die Aufnahmeeinheit integriert ist. Dadurch wird ermöglicht, dass die jeweilige Justierungsmarkierung der Aufnahmeeinheit gezielt und unabhängig beleuchtet werden kann. Dies kann auch dann besonders nützlich sein, wenn die Lichtverhältnisse in dem mit der jeweiligen Aufnahmeeinheit abgebildeten Sichtfeld deutlich unterschiedlich sind. Dann kann mit einer selektiven Beleuchtung der Justierungsmarkierung einzelner Aufnahmeeinheiten ein Ausgleich hinsichtlich der Lichtverhältnisse und damit auch hinsichtlich der Sichtbarkeit der Justierungsmarkierungen erreicht werden.

Um eine möglichst genaue Justierung der Aufnahmeeinheiten der Mehr-Sensor-Kamera zu ermöglichen, ist es dabei besonders vorteilhaft, wenn die Beleuchtungsvorrichtung derart ausgestaltet ist, dass die Justierungsmarkierung mit weitestgehend parallelem Licht beleuchtet wird, um eine möglichst verzerrungsfreie Abbildung der Justierungsmarkierung auf dem Bildsensor zu ermöglichen. Dazu kann die Beleuchtungsvorrichtung entsprechende optische Elemente aufweisen, die ein weitestgehend paralleles Lichtfeld erzeugen.

Um bei Abbildung der Justierungsmarkierung auf dem Bildsensor keine Abweichungen in Abhängigkeit davon der Beleuchtungsart der Justierungsmarkierung zu erzeugen, ist es zudem besonders vorteilhaft, wenn die Beleuchtungsvorrichtung derart in die Aufnahmeeinheit integriert ist, dass das von der Beleuchtungsvorrichtung erzeugte Lichtfeld parallel zu dem Lichtweg ist, das von außen auf die Aufnahmeeinheit einstrahlendes Licht durchläuft.

Einer reproduzierbaren Justierung der Aufnahmeeinheiten ist zudem zuträglich, wenn die Beleuchtungsvorrichtung in einer festen, insbesondere unveränderlichen Position bezüglich der Justierungsmarkierung und/oder des Bildsensors angeordnet ist. Damit wird sichergestellt, dass bei der Verwendung der Beleuchtungsvorrichtung eine Abbildung der Justierungsmarkierung auf dem Bildsensor an einer festen, unveränderten Position erfolgt.

Eine besonders einfache Justierung der Aufnahmeeinheiten der Mehr-Sensor-Kamera wird gemäß einer vorteilhaften Ausführungsform dadurch erreicht, dass die Aufnahmeeinheiten nebeneinanderliegend auf einer gemeinsamen Montagevorrichtung befestigt sind. Die Montagevorrichtung kann beispielsweise als Montageplatte ausgebildet sein, auf der die Aufnahmeeinheiten angeordnet und/oder befestigt sind.

In einer weiteren vorteilhaften Ausführung ist zudem vorgesehen, dass die Mehr-Sensor-Kamera zumindest eine Justiervorrichtung, insbesondere eine mechanische Justiervorrichtung, zum Justieren einer Aufnahmeeinheit aufweist. Beispielsweise kann eine mechanische Justiervorrichtung eine oder mehrere Stellschrauben aufweisen, bei deren Betätigung sich die Ausrichtung der Aufnahmeeinheit bezüglich der oder den anderen Aufnahmeeinheiten verändert.

Alternativ oder zusätzlich kann vorteilhaft vorgesehen sein, dass die Justierungsvorrichtung zum Justieren, insbesondere zum mechanischen Justieren der Aufnahmeeinheit gegenüber einer gemeinsamen Montagevorrichtung der Aufnahmeeinheiten eingerichtet ist.

Es kann besonders vorteilhaft vorgesehen sein, wenn die Justierungsvorrichtung einen motorischen, insbesondere einen elektro-motorischen Antrieb aufweist. Beispielsweise kann ein Stellmotor oder ein Servomotor von der Justierungsvorrichtung umfasst sein. Auf diese Art wird ermöglicht, dass über eine entsprechende Ansteuerung des oder der Motoren eine ferngesteuerte Justierung der Aufnahmeeinheiten mittels der Justierungsvorrichtungen beispielsweise aus dem Inneren eines Fahrzeugs vorgenommen wird.

Um eine möglichst genaue Justierung der Aufnahmeeinheiten zu gewährleisten, ist es gemäß einer weiteren vorteilhaften Ausgestaltung der Mehr-Sensor-Kamera vorgesehen, dass die Justierungsvorrichtung zur horizontalen und/oder vertikalen Justierung der Aufnahmeeinheit ausgebildet ist. Dazu können an sich bekannte Schwenk- oder Drehmechanismen vorgesehen sein, die die Aufnahmeeinheit bei der Justierung um die Vertikale und/oder um die Horizontale verdrehen oder verschwenken.

Ebenfalls vorteilhaft zur möglichst genauen Justierung der Aufnahmeeinheit kann vorgesehen sein, dass die Justierungsvorrichtung zur Rotation der Aufnahmeeinheit um eine optische Achse der Aufnahmeeinheit eingerichtet ist. Eine Rotation der Aufnahmeeinheit um eine optische Achse kann beispielsweise durch eine entsprechende Zahnradanordnung und/oder Zahnradverbindung erreicht werden.

Darüber hinaus wird zur Lösung der vorstehend genannten Aufgabe bei einem Verfahren der eingangs genannten Art vorgeschlagen, dass bei einer Belichtung der Bildsensoren eine in die Aufnahmeeinheit integrierte Justierungsmarkierung, insbesondere zur Justierung von Sichtfeldern der Aufnahmeeinheiten zueinander, abgebildet wird.

Dieses Verfahren ermöglicht es, eine Justierung von zwei oder mehr Aufnahmeeinheiten einer Mehr-Sensor-Kamera auf geringstem Raum vorzunehmen, da keine Muster oder Musterteppiche im Sichtfeld der Mehr-Sensor-Kamera oder deren Aufnahmeeinheiten außerhalb der Mehr-Sensor-Kamera angeordnet werden müssen. Dabei kann dem erfindungsgemäßen Verfahren eine Erstjustierung der zwei oder mehr Aufnahmeeinheiten vorangegangen sein. Bei der Erstjustierung können beispielsweise die bekannten Verfahren zur Justierung zum Einsatz kommen.

In einer vorteilhaften Ausgestaltung des Verfahren ist vorgesehen, dass mittels zumindest einer Justiervorrichtung zumindest eine Aufnahmeeinheit derart justiert wird, dass Abbildungen von Justierungsmarkierungen unterschiedlicher, insbesondere nebeneinander angeordneter, Aufnahmeeinheiten in einer gemeinsamen Darstellung der Abbildungen von zwei oder mehr Aufnahmeeinheiten in eine bestimmte Relativposition zueinander gebracht werden.

In einer weiteren vorteilhaften Ausführung des Verfahrens ist vorgesehen, dass mittels zumindest einer Justiervorrichtung zumindest eine Aufnahmeeinheit derart justiert wird, dass Abbildungen von einer transparenten Fläche der Justierungsmarkierungen unterschiedlicher, insbesondere nebeneinander angeordneter Aufnahmeeinheiten in einer gemeinsamen Darstellung der Abbildungen von zwei oder mehr Aufnahmeeinheiten in eine bestimmte Relativposition zueinander gebracht werden. Dadurch kann eine genaue Justierung erfolgen, ohne dass durch die Justierungsmarkierung, insbesondere die Fläche der Justierungsmarkierung, die mit dem jeweiligen Bildsensor erzeugte Abbildung beeinträchtigt wird.

In einer ebenfalls vorteilhaften Ausgestaltung des Verfahrens ist vorgesehen, dass mittels zumindest einer Justierungsvorrichtung zumindest eine Aufnahmeeinheit derart justiert wird, dass Abbildungen der Justierungsmarkierungen unterschiedlicher, insbesondere nebeneinander angeordneter, Aufnahmeeinheiten in einer gemeinsamen Darstellung der Abbildungen von zwei oder mehr Aufnahmeeinheiten in eine zumindest teilweise deckungsgleiche Position zueinander gebracht werden. Eine derartige Justierung kann besonders schnell und intuitiv ausgeführt werden, da eine deckungsgleiche oder zumindest teilweise deckungsgleiche Positionierung unterschiedliche Justierungsmarkierungen in einer gemeinsamen Darstellung der Abbildungen von zwei oder mehr Aufnahmeeinheiten leicht zu identifizieren ist.

Den gleichen Vorteil bietet auch eine vorteilhafte Ausgestaltung des Verfahrens gemäß der eine Justierungsvorrichtung zumindest einer Aufnahmeeinheit derart justiert wird, dass Abbildungen der Justierungsmarkierungen unterschiedlicher, insbesondere nebeneinander angeordneter Aufnahmeeinheiten in einer gemeinsamen Darstellung der Abbildungen von zwei oder mehr Aufnahmeeinheiten in eine zumindest teilweise parallele Position zueinander gebracht werden.

Um eine effektive und genaue Justierung auch bei widrigen Umweltbedingungen, insbesondere Abbildungsbedingungen zu ermöglichen, sieht eine vorteilhafte Ausgestaltung des Verfahrens vor, dass die Justierungsmarkierung mit einer Beleuchtungsvorrichtung, insbesondere mit einer von der Aufnahmeeinheit umfassten Beleuchtungsvorrichtung beleuchtet wird.

In einer ebenfalls vorteilhaften Ausführungsform des Verfahrens ist vorgesehen, dass mittels zumindest einer Justierungsvorrichtung zumindest eine Aufnahmeeinheit gegenüber einer gemeinsamen Montagevorrichtung, auf der die Aufnahmeeinheiten nebeneinander liegend angeordnet sind, verschoben und/oder rotiert wird, insbesondere mechanisch verschoben und/oder rotiert wird.

Weiter sind für das Verfahren gleiche oder entsprechende Merkmale und Vorteile vorgesehen, wie sie im Zusammenhang mit der Mehr-Sensor-Kamera beschrieben wurden.

Weitere Vorteile und Einzelheiten der erfindungsgemäßen Mehr-Sensor-Kamera, wie auch des erfindungsgemäßen Verfahrens, werden nachfolgend unter Zuhilfenahme der beigefügten, schematisierten Zeichnungen von Ausführungsbeispielen erläutert werden. Darin zeigen:
- Fig. 1: eine erfindungsgemäße Mehr-Sensor-Kamera und deren Einbindung in ein Mehr-Sensor-Kamera-System;
- Fig. 2: einen Ausschnitt einer Explosionszeichnung einer Aufnahmeeinheit einer erfindungsgemäßen Mehr-Sensor-Kamera;
- Fig. 3: eine alternative Ausführungsform einer erfindungsgemäßen Mehr-Sensor-Kamera;
- Fig. 4: eine Seitenansicht einer Aufnahmeeinheit einer Mehr-Sensor-Kamera;
- Fig. 5: eine Draufsicht auf eine Aufnahmeeinheit einer Mehr-Sensor-Kamera;

- Fig. 6a,b: eine beispielhafte Darstellung eines Teils des erfindungsgemäßen Verfahrens.

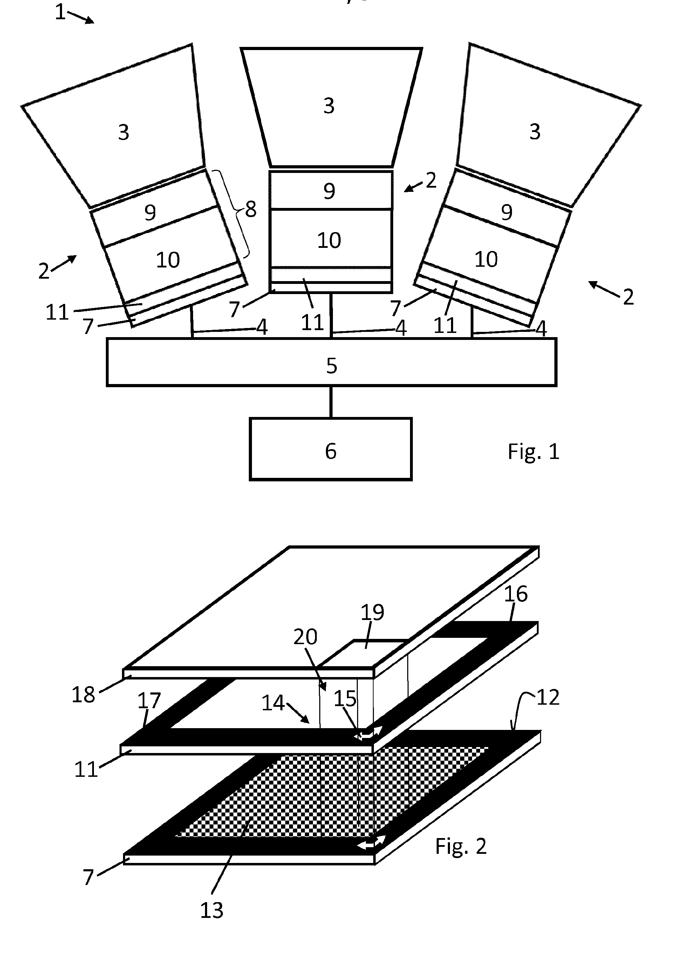

Fig. 1 zeigt eine Mehr-Sensor-Kamera 1 mit drei Aufnahmeeinheiten 2, wobei jede Aufnahmeeinheit 2 ein Sichtfeld 3 erfasst oder abbildet. Die Signale der Aufnahmeeinheiten 2 werden über eine entsprechende Signalschnittstelle 4, die beispielsweise als Signalleitung ausgebildet sein kann, an eine Verarbeitungseinheit 5 weitergeleitet. Die Verarbeitungseinheit 5 kann entweder in die Mehr-Sensor-Kamera 1 integriert sein oder separat zu der Mehr-Sensor-Kamera 1 vorgesehen sein. Die Verarbeitungseinheit 5 sorgt dafür, dass die Bildsignale der Aufnahmeeinheiten 2 gemäß einer vorgegebenen Vorschrift überlagert und ggf. entzerrt werden. Die Verarbeitungseinheit 5 generiert ein einheitliches Bildsignal oder Ausgangssignal, welches auf der Anzeige 6 angezeigt wird.

Die Anzeige 6 ist dabei nicht von der Mehr-Sensor-Kamera 1 umfasst. Als Anzeige eignen sich dabei Monitore, Projektoren, kopfbefestigbare Display oder dergleichen. Es kann jedoch auch vorgesehen sein, dass eine mobile Anzeige erfolgt, die durch eine kabellose Übertragung erreicht wird.

Die Aufnahmeeinheiten 2 können beispielsweise als Videokameras ausgebildet sein und weisen in der Darstellung der Fig. 1 einen Bildsensor 7 beispielsweise einen CMOS-Sensor auf. Der Bildsensor 7 weist dabei eine Vielzahl lichtempfindlicher Elemente wie beispielsweise Fotozellen auf, anhand derer das von den im Sichtfeld 3 befindlichen Gegenstände reflektierte Licht in ein digitales Sensorsignal umgewandelt wird. Zur Abbildung der Gegenstände im Sichtfeld 3 der Aufnahmeeinheit 2 auf den Bildsensor 7 kann die Aufnahmeeinheit 2 zudem eine Abbildungsoptik 8 aufweisen. Die Abbildungsoptik 8 kann ihrerseits viele und unterschiedliche optische Elemente wie beispielsweise Linsen, Filter, Spiegel und/oder Blenden umfassen. In der Darstellung der Fig. 1 ist beispielhaft vorgesehen, dass die Abbildungsoptik 8 eine Linse 9 sowie eine Blende 10 umfasst.

Zudem weisen die Aufnahmeeinheiten 2 der Fig. 1 ein weiteres Element auf, welches entweder von der Abbildungsoptik 8 umfasst sein kann oder aber separat also zusätzlich oder alternativ zur Abbildungsoptik 8 vorgesehen sein kann. Dabei handelt es sich um eine direkt mit dem Bildsensor 7 verbundene transparente Abdeckschicht 11.

Gemäß der vorliegenden Erfindung ist dabei vorgesehen, dass eine in der Darstellung der Fig. 1 nicht gezeigte Justierungsmarkierung in die Aufnahmeeinheit 2 integriert ist. Die Justierungsmarkierung kann beispielsweise auf der transparenten Abdeckschicht 11 angebracht oder angeordnet sein. Ebenfalls kann die Justierungsmarkierung in die Abbildungsoptik 8 der Aufnahmeeinheit 2 integriert sein.

Zur besseren Veranschaulichung der Integrierung einer Justierungsmarkierung in eine Aufnahmeeinheit zeigt die Fig. 2 einen beispielhaften Ausschnitt aus einer Explosionszeichnung einer Aufnahmeeinheit 2. In einer erfindungsgemäßen Mehr-Sensor-Kamera können in den Aufnahmeeinheiten 2 zusätzliche Merkmale vorgesehen sein, die in der Darstellung der Fig. 2 aus Gründen der Übersichtlichkeit nicht dargestellt sind. In der Fig. 2 dargestellt ist ein Bildsensor 7. Die für die Belichtung vorgesehene Oberfläche 12 des Bildsensors 7 weist eine Vielzahl von Fotozellen 13 auf, die das einfallende Licht in ein elektrisches, vorzugsweise digitales Sensorsignal umwandeln. Darüber hinaus zeigt die Fig. 2 eine auf dem Bildsensor 7 angeordnete transparente Abdeckschicht 11. Auf der transparenten Abdeckschicht 11 ist dabei eine Justierungsmarkierung 14 angeordnet.

Die Justierungsmarkierung 14 umfasst dabei eine transparente Fläche 15 sowie eine opake Kontur 16, die im Beispiel der Fig. 2 als umlaufender Rand 17 auf den Bildsensor 7 abgebildet wird. Die transparente Fläche 15 der Justierungsmarkierung 14 ist als rechtwinkliges Koordinatenkreuz ausgestaltet. Der Fig. 2 ist entnehmbar, wie sich die Justierungsmarkierung 14 bei einem Lichteinfall in die Aufnahmeeinheit 2 auf dem Bildsensor 7 abbildet. Durch die opake Kontur 16 wird ein Rand 17 des Bildsensors 7 abgeschattet bzw. abgedunkelt. Die transparente Fläche 14 der Justierungsmarkierung 14 wird hingegen als helle Abbildung auf dem Bildsensor 7 abgebildet.

Demnach ist die Justierungsmarkierung 14 der Fig. 2 als permanente Justierungsmarkierung gemäß der obigen Definition ausgeführt. Denn das Vorhandensein oder die Existenz der Justierungsmarkierung 14 ist vom Lichteinfall in die Aufnahmeeinheit 2 oder der Erzeugung einer sonstigen Strahlung, wie beispielsweise mittels der nachfolgend beschriebenen Beleuchtungsvorrichtung, unabhängig. Lediglich die Sichtbarmachung oder Erzeugung einer Abbildung der permanenten Justierungsmarkierung 14 ist von einer entsprechenden Belichtung abhängig.

In der Fig. 2 ebenfalls dargestellt ist eine weitere Schicht 18, die ebenfalls weitestgehend transparent ausgebildet ist. In die Schicht 18 ist zudem die Beleuchtungsvorrichtung 19 integriert. Die Beleuchtungsvorrichtung 19, die beispielsweise als Leuchtdiode oder als Anordnung mehrerer Leuchtdioden ausgeführt sei kann, erzeugt weitestgehend paralleles Licht, wie anhand der punktierten Darstellung des mit der Beleuchtungsvorrichtung 19 erzeugten Lichtfelds 20 dargestellt. Gleichzeitig ist das Lichtfeld 20 auch weitestgehend parallel zu dem Licht, was von außen in die Aufnahmeeinheit einfällt.

Durch die Beleuchtungsvorrichtung 19 ist es möglich, die Aufnahmeeinheiten 2 auch bei widrigen oder schlechten Abbildungsbedingungen, wie beispielsweise mangelnder Helligkeit zu justieren. Denn die Beleuchtungsvorrichtung beleuchtet die Justierungsmarkierung 14 auf der Abdeckschicht 11, so dass die Justierungsmarkierung 14 auf dem Sensorelement 7 abgebildet wird.

Die mit Bezug auf die Fig. 2 beschriebene Justierungsmarkierung 14 ist zudem als passive Justierungsmarkierung ausgeführt, wobei eine Belichtung der Justierungsmarkierung 14 zu einer Abbildung der Justierungsmarkierung 14 auf dem Bildsensor 7 führt. Dabei kann die Belichtung der Justierungsmarkierung sowohl von einem externen Lichteinfall in die Aufnahmeeinheit 2, von einer Belichtung furch die Beleuchtungsvorrichtung 19 oder durch eine weitere alternative Form der Belichtung herbeigeführt werden.

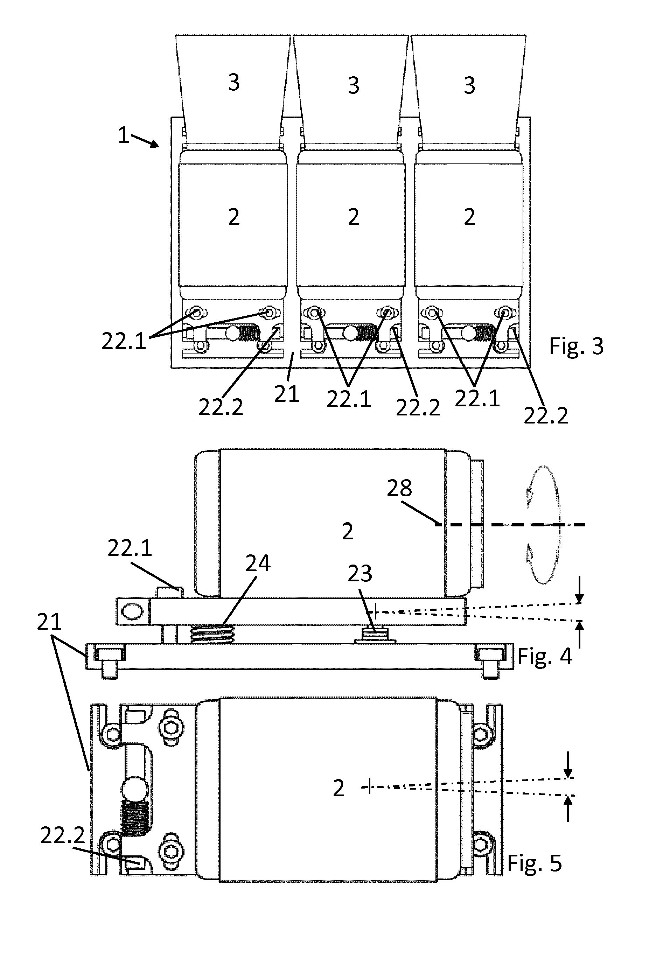

Die Fig. 3 zeigt eine Mehr-Sensor-Kamera 1, bei der drei Aufnahmeeinheiten 2, die jeweils ein Sichtfeld 3 erfassen, auf einer gemeinsamen Montagevorrichtung 21 nebeneinander liegend angeordnet sind. Dabei sind die Aufnahmeeinheiten 2 mit mechanischen Justiervorrichtungen 22.1, 22.2 versehen, um die Ausrichtung der Aufnahmeeinheiten 2 gegenüber der Montagevorrichtung 21 zu verändern. Daraus folgt auch, dass mit den Justiervorrichtungen 22.1, 22.2 der Aufnahmeeinheiten 2 das jeweilige Sichtfeld 3 verändert wird. Die Justierungsvorrichtung 22.1 kann beispielsweise als Stellschraube ausgebildet sein und ein Verschwenken oder Verkippen der Aufnahmeeinheiten 2 in die Zeichenebene der Fig. 3 hinein oder aus der Zeichenebene der Fig. 3 heraus bewerkstelligen. Die Justierungsvorrichtung 22.2 kann ebenfalls als Stellschraube ausgeführt sein und ein Verschwenken der Aufnahmeeinheiten 2 in der Zeichenebene der Fig. 3 bewirken.

Die jeweiligen Justierungsmöglichkeiten, die mit den Justierungsvorrichtungen 21.1 und 21.2 erreicht werden können, werden anhand der Fig. 4 und 5 noch eingehender beschrieben. Die Fig. 4 und 5 zeigen jeweils eine Aufnahmeeinheit 2 aus unterschiedlichen Ansichten und die gemeinsame Montagevorrichtung 21, auf der die Aufnahmeeinheit 2 der Fig. 4 und 5 zusammen mit weiteren, in den Fig. 4 und 5 nicht dargestellten Aufnahmeeinheiten 2 nebeneinander liegend angeordnet ist.

Die Fig. 4 zeigt zudem die als Stellschraube ausgebildete Justiervorrichtung 22.1, die mit einer Halterung 23 und einer Feder 24 der Aufnahmeeinheit zusammenwirkt. Durch die Vornahme einer Justierung der Stellschraube der Justierungsvorrichtung 22.1 wird die Aufnahmeeinheit 2 gemäß der in der Fig. 4 strichliniert gezeichneten Verstellrichtung verstellt oder justiert. Entsprechend führt die Betätigung der als Stellschraube ausgeführten Justiervorrichtung 22.2 der Fig. 5 dazu, dass die Aufnahmeeinheit 2 entlang der in der Fig. 5 strichliniert gezeichneten Verstellrichtung justiert werden kann. Zudem kann ein in den Fig. 4 und 5 nicht dargestellte Justiervorrichtung vorgesehen sein, die ermöglicht, dass die Aufnahmeeinheit 2 um die optische Achse 28 rotiert wird wie in Fig. 4 angedeutet.

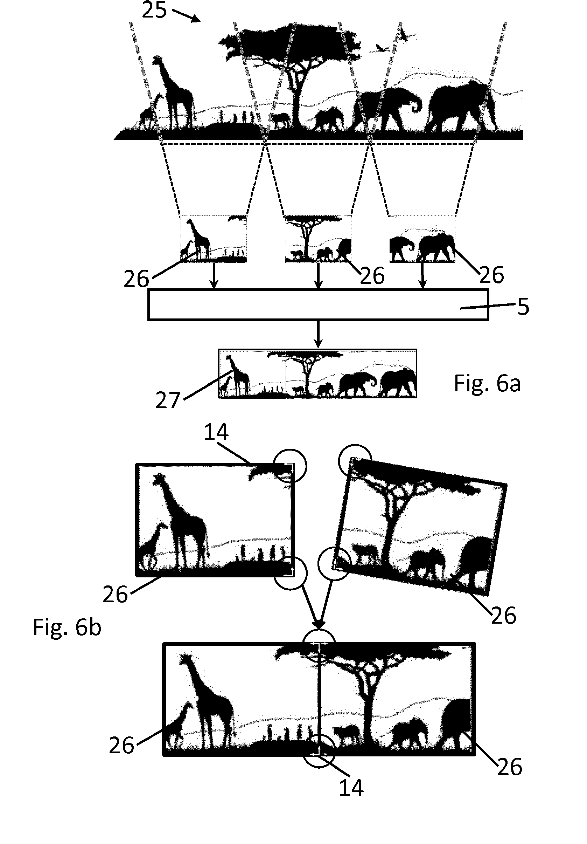

Fig. 6a zeigt beispielhaft den Ablauf eines Verfahrens zur Bildgebung bei der Verwendung einer Mehr-Sensor-Kamera. Gezeigt ist ein Ausschnitt 25 der Realität, die mit der Mehr-Sensor-Kamera abgebildet werden soll. Bei dem Ausschnitt handelt es sich um eine Panoramaansicht, die einen großen Winkelbereich der umgebenden Realität abbildet. Der Ausschnitt 25 wird dabei von drei Aufnahmeeinheiten erfasst, die jeweils einen Teil des Ausschnitts 26 abbilden, der sich im Sichtfeld 3 der jeweiligen Aufnahmeeinheit befindet.

Die Ausrichtung des Sichtfelds 3 hängt dabei von der jeweiligen Ausrichtung der Aufnahmeeinheit ab. Der im jeweiligen Sichtfeld 3 erfasste oder abgebildete Teil 26 des Abschnitts 25 wird mit der Verarbeitungsvorrichtung 5 zu einem Gesamtabbild 27 des Ausschnitts 25 verarbeitet. Anhand der Fig. 6a wird offenkundig, dass der besonders breit oder weitwinkelig geformte Ausschnitte 25 der Realität besonders gut mit einer Mehr-Sensor-Kamera abgebildet werden können.

Um das nahtlose und ggf. verzerrungsfreie Gesamtbild 27, wie es in der Fig. 6a skizziert ist, zu erreichen, ist es jedoch erforderlich, dass die Sichtfelder 3 eine bestimmte Orientierung zueinander aufweisen. Dies kann mittels eines Kalibrierungsverfahrens erreicht werden, wie es beispielsweise in der Fig. 6b skizziert ist. Darin gezeigt sind im oberen Teil zwei Abbildungen, wie sie mit einem Bildsensor einer erfindungsgemäßen Mehr-Sensor-Kamera erzeugt werden können. Die Abbildungen umfassen dabei die von der in die Aufnahmeeinheit integrierten Justierungsmarkierung verursachten Veränderungen der Abbildung. Im Fall der Fig. 6b handelt es sich bei den Abbildungen der Justierungsmarkierung um den abgedunkelten Rand sowie das helle Koordinatenkreuz. Im oberen Teil der Fig. 6b ist zu erkennen, dass die jeweiligen Abbildungen nicht zueinander justiert sind, so dass kein zusammenhängendes Abbild erzeugt wird. Durch das erfindungsgemäße Verfahren wird jedoch ermöglicht, dass die Abbildungen der Fig. 6b in den im unteren Teil dargestellten Zustand überführt werden, indem die Abbildungen der Justierungsmarkierungen teilweise deckungsgleich und teilweise parallel zueinander angeordnet sind und somit eine nahtlose Abbildung mit einer erfindungsgemäßen Mehr-Sensor-Kamera ermöglicht wird.

**Bezugszeichen:**
- 1: Mehr-Sensor-Kamera
- 2: Aufnahmeeinheiten
- 3: Sichtfeld
- 4: Signalleitung
- 5: Verarbeitungseinheit
- 6: Anzeige
- 7: Bildsensor
- 8: Abbildungsoptik
- 9: Linse
- 10: Blende
- 11: Abdeckschicht
- 12: Oberfläche
- 13: Fotozellen
- 14: Justierungsmarkierung
- 15: Fläche
- 16: Kontur
- 17: Rand
- 18: Schicht
- 19: Beleuchtungsvorrichtung
- 20: Lichtfeld
- 21: Montagevorrichtung
- 22.1: Justierungsvorrichtung
- 22.2: Justierungsvorrichtung
- 23: Halterung
- 24: Feder
- 25: Ausschnitt
- 26: Teil
- 27: Gesamtabbild
- 28: optische Achse

## Patentansprüche

1. Mehr-Sensor-Kamera mit mindestens zwei Aufnahmeeinheiten (2),
die jeweils einen Bildsensor (7) umfassen,
**gekennzeichnet durch**
eine in die Aufnahmeeinheiten (2) integrierte Justierungsmarkierung (14) zur Justierung von Sichtfeldern (3) der Aufnahmeeinheiten (2) zueinander.

2. Mehr-Sensor-Kamera nach Anspruch 1, **dadurch gekennzeichnet, dass** die Justierungsmarkierung (14) auf einem fest gegenüber dem Bildsensor angeordneten Element der Aufnahmeeinheit (2) angeordnet ist.

3. Mehr-Sensor-Kamera nach einem der Ansprüche 1 oder 2, **dadurch gekennzeichnet, dass** die Justierungsmarkierung (14) in eine Abbildungsoptik (8) der Aufnahmeeinheit (2) integriert ist.

4. Mehr-Sensor-Kamera nach einem der Ansprüche 1 bis 3, **dadurch gekennzeichnet, dass** die Justierungsmarkierung (14) auf einer direkt mit dem Bildsensor (7) verbundenen transparenten Abdeckschicht (11) angeordnet ist.

5. Mehr-Sensor-Kamera nach einem der Ansprüche 1 bis 4, **dadurch gekennzeichnet, dass** die Justierungsmarkierung (14) derart angeordnet ist, dass bei einer Belichtung des Bildsensors (7) die Justierungsmarkierung (14) am Rand und/oder in einer Ecke des Bildsensors (7) abgebildet wird.

6. Mehr-Sensor-Kamera nach einem der Ansprüche 1 bis 5, **dadurch gekennzeichnet, dass** die Justierungsmarkierung (14) eine transparente Fläche (15) und eine die Fläche (15) zumindest abschnittsweise umschließende opake Kontur (16) aufweist.

7. Mehr-Sensor-Kamera nach Anspruch 6, **dadurch gekennzeichnet, dass** die opake Kontur (16) derart angeordnet ist, dass bei einer Belichtung des Bildsensors (7) die Kontur (16) zumindest abschnittsweise umlaufend am Rand des Bildsensors abgebildet wird.

8. Mehr-Sensor-Kamera nach einem der Ansprüche 1 bis 7, **dadurch gekennzeichnet, dass** die Justierungsmarkierung (14), insbesondere die Fläche (15) der Justierungsmarkierung (14), als Koordinatenkreuz, insbesondere als rechtwinkliges Koordinatenkreuz, ausgebildet ist.

9. Mehr-Sensor-Kamera nach einem der Ansprüche 1 bis 8, **gekennzeichnet durch** eine Beleuchtungsvorrichtung (19) zur Beleuchtung der Justierungsmarkierung.

10. Mehr-Sensor-Kamera nach Anspruch 9, **dadurch gekennzeichnet, dass** je eine Beleuchtungsvorrichtung (19) von jeweils einer Aufnahmeeinheit (2) umfasst ist.

11. Mehr-Sensor-Kamera nach Anspruch 10, **dadurch gekennzeichnet, dass** die Beleuchtungsvorrichtung (19) in einer festen Position bezüglich der Justierungsmarkierung (14) und/oder des Bildsensors (7) angeordnet ist.

12. Mehr-Sensor-Kamera nach einem der Ansprüche 1 bis 11, **dadurch gekennzeichnet, dass** die Aufnahmeeinheiten (2) nebeneinanderliegend auf einer gemeinsamen Montagevorrichtung (21) befestigt sind.

13. Mehr-Sensor-Kamera nach einem der Ansprüche 1 bis 12, **gekennzeichnet durch** zumindest eine Justierungsvorrichtung (22.1, 22.2), insbesondere eine mechanische Justiervorrichtung (22.1, 22.2), zum Justieren einer Aufnahmeeinheit (2).

14. Mehr-Sensor-Kamera nach Anspruch 13, **dadurch gekennzeichnet, dass** die Justierungsvorrichtung (22.1, 22.2) zum Justieren, insbesondere zum mechanischen Justieren, der Aufnahmeeinheit (2) gegenüber der gemeinsamen Montagevorrichtung (21) eingerichtet ist.

15. Mehr-Sensor-Kamera nach Anspruch 13 oder 14, **dadurch gekennzeichnet, dass** die Justierungsvorrichtung (22.1, 22.2) zur horizontalen und/oder vertikalen Justierung der Aufnahmeeinheit (2) ausgebildet ist.

16. Mehr-Sensor-Kamera nach einem der Ansprüche 13 bis 15, **dadurch gekennzeichnet, dass** die Justierungsvorrichtung (22.1, 22.2) zur Rotation der Aufnahmeeinheit um eine optische Achse (28) der Aufnahmeeinheiten ausgebildet ist.

17. Verfahren zur Justierung von mindestens zwei Aufnahmeeinheiten (2) einer Mehr-Sensor-Kamera (1), wobei die Aufnahmeeinheiten (2) zumindest einen Bildsensor (7) umfassen,
**dadurch gekennzeichnet,**
**dass** bei einer Belichtung der Bildsensoren (7) eine in die Aufnahmeeinheit (2) integrierte Justierungsmarkierung (14), insbesondere zur Justierung von Sichtfeldern (3) der Aufnahmeeinheiten (2) zueinander, abgebildet wird.

18. Verfahren nach Anspruch 17, **dadurch gekennzeichnet, dass** mittels zumindest einer Justierungsvorrichtung (22.1, 22.2) zumindest eine Aufnahmeeinheit derart justiert wird, dass Abbildungen der Justierungsmarkierungen (14) in einer gemeinsamen Darstellung der Abbildungen von zwei oder mehr unterschiedlichen, insbesondere nebeneinander angeordneten, Aufnahmeeinheiten (2) in eine bestimmte Relativposition zueinander gebracht werden.

19. Verfahren nach einem der Ansprüche 17 oder 18, **dadurch gekennzeichnet, dass** die Justierungsmarkierung (22.1, 22.2) mit einer Beleuchtungsvorrichtung (19), insbesondere mit einer von der Aufnahmeeinheit (2) umfassten Beleuchtungsvorrichtung (19), beleuchtet wird.

20. Verfahren nach einem der Ansprüche 17 bis 19, **dadurch gekennzeichnet, dass** mittels zumindest einer Justierungsvorrichtung (22.1, 22.2) zumindest eine Aufnahmeeinheit (2) gegenüber einer gemeinsamen Montagevorrichtung (21), auf der die Aufnahmeeinheiten (2) nebeneinanderliegend angeordnet sind, verschoben und/oder rotiert wird, insbesondere mechanisch verschoben und/oder rotiert wird.
